# EUROPÄISCHE PATENTANMELDUNG

(11) **EP 2 873 522 A1**
(43) Veröffentlichungstag der Anmeldung: **20.05.2015**
(21) Anmeldenummer: 13192964.8
(22) Anmeldetag: 14.11.2013
(51) Int. Cl.: B32B 21/02, B32B 21/13, B32B 3/12, B32B 3/18, B32B 3/28, E04C 2/36, E04C 2/34

(54) **Verbundplatte aus Holzwerkstoff und Verfahren zu ihrer Herstellung**

(71) Anmelder: Kronotec AG, 6006 Luzern (CH)
(72) Erfinder: Piaget, Charl, 6122 Menznau (CH); Gloor, Nicolas, 6003 Luzern (CH); Howald, Martin, CH-6130 Willisau (CH)
(74) Vertreter: Kalkoff & Partner

(57) **Zusammenfassung**

Die Erfindung betrifft ein Verfahren zum Herstellen einer Verbundplatte (2) und eine Verbundplatte. Um eine flexibel an die Anforderungen der Verbundplatte (2) anpassba-re Mittellage (4) bereitzustellen, ist vorgesehen, dass das Verfahren die folgenden Schritte aufweist:
- Herstellen von mindestens zwei wellenförmigen Holzwerkstoffplatten (8),
- Verbinden der mindestens zwei wellenförmigen Holzwerkstoffplatten (8) an Anlageabschnitten (20) auf der Oberfläche (14) der Holzwerkstoffplatten (8),
- Zerlegen der miteinander verbundenen wellenförmigen Holzwerkstoffplatten (8) in Pakete wellenförmiger Lamellen (12) mit Trennkanten (16) und einer Oberfläche (17)
- Anordnen eines Pakets wellenförmiger Lamellen zwischen zwei Außenplatten aus Holzwerkstoff, wobei die Oberfläche (17) der wellenförmigen Lamellen in einem Winkel zwischen den zwei Außenplatten angeordnet ist, der von 90° abweicht, bezogen auf die Ebene, die durch eine Deckschicht gebildet wird.

## Beschreibung

Die Erfindung betrifft eine Verbundplatte aus Holzwerkstoff und ein Verfahren zu ihrer Herstellung.

Verbundplatten weisen eine Mittellage und auf der Mittellage aufgebrachte Deckschichten auf. Verbundplatten werden üblicherweise sowohl im Möbelbau und Innenausbau (dort als Leichtbau-Verbundplatte) oder im konstruktiven Bereich eingesetzt.

Mittellagen aus Holzwerkstoff sind z. B. aus der DE 10 2006 054 634 A1 bekannt. Diese Schrift offenbart die Verwendung einer wellenförmigen Holzwerkstoffplatte oder von aneinandergefügten, geraden Lamellen aus Holzwerkstoff als Mittellage für die Herstellung einer Leichtbau-Verbundplatte.

Der Nachteil der bekannten Mittellage aus Holzwerkstoff ist, dass die Anordnung der Mittellage nur beschränkt einstellbar ist, insbesondere ist es schwierig, die Mittellage so anzuordnen, dass an möglichst jeder Stelle der Deckschicht wo eine Schraube oder ein Nagel eingebracht werden kann, die Verbundplatte den gleichen Ausziehwiderstand aufweist.

Es ist daher Aufgabe der Erfindung, eine Verbundplatte aus Holzwerkstoff bereitzustellen, deren Mittellage flexibler angepasst werden kann an die Anforderungen der jeweiligen Verbundplatte.

Diese Aufgabe wird gelöst durch ein Verfahren nach Anspruch 1 und eine Verbundplatte nach Anspruch 9.

Das erfindungsgemäße Verfahren zum Herstellen einer Verbundplatte weist folgende Schritte auf:
- Herstellen von mindestens zwei wellenförmigen Holzwerkstoffplatten mit einer Oberfläche,
- Verbinden der mindestens zwei wellenförmigen Holzwerkstoffplatten an Anlageabschnitten auf der Oberfläche der Holzwerkstoffplatten zu einem Stapel (17),
- Herstellen einer Mittellage durch Zerlegen des Stapels in Pakete wellenförmiger Lamellen mit Trennkanten, die in einem Winkel α, der von 90° abweicht, zur Oberfläche angeordnet ist, wobei die Breite der Lamellen die Dicke der Mittellage vorgibt,
- Anordnen einer Mittellage zwischen zwei Deckschichten aus Holzwerkstoff, wobei die Oberfläche Mittellage in einem Winkel β angeordnet ist, der von 90° abweicht, bezogen auf die Ebene, die durch eine Deckschicht gebildet wird.

Als Holzwerkstoffplatten, die für das Verfahren nach der Erfindung geeignet sind, kommen Holzwerkstoffe wie Sperrholz, Furnierplatten, Spanplatten, OSB-Platten, aber auch Faserplatten in Betracht. Holzwerkstoffe zeichnen sich durch eine geringere Anisotropie aus als z. B. Holz oder Furnier. Entsprechend können Mittellagen hergestellt werden, die hinsichtlich Zug- und Druckfestigkeit gleichmäßigere und bessere Festigkeitswerte erreichen. Es können Platten beliebiger Stärke gebogen werden, bevorzugt sind jedoch Holzwerkstoffplatten mit einer Stärke von bis zu 6 mm. Besonders einfach und wirtschaftlich ist es, dünne Holzwerkstoffplatten, insbesondere Spanplatten und mitteldichte Faserplatten (MDF-Platten), mit einer Stärke von bis zu 4mm, vorteilhaft von bis zu 3 mm zu verwenden. Typisch ist die Verwendung von Holzwerkstoffplatten mit einer Materialstärke von 1,5 mm bis 3 mm.

Die Holzwerkstoffplatten, aus denen die wellenförmigen Lamellen der Mittellage hergestellt werden, werden erfindungsgemäß gebogen, so dass eine wellenförmige Platte entsteht. Die optimale Wellenlänge der Holzwerkstoffplatte beträgt zwischen 5 mm und 200 mm, bevorzugt zwischen 10 mm und 100 mm. Die optimale Amplitude beträgt zwischen 0,5 mm und 20 mm, vorzugsweise zwischen 1 mm und 10 mm. Geringere Wellenlängen und Amplituden sind ohne weiteres technisch herstellbar, jedoch verringert sich der Effekt der Gewichtseinsparung zu stark. Größere Wellenlängen und Amplituden sind ebenfalls möglich, allerdings erfordern sie einen erhöhten apparativen Aufwand bei der Herstellung der wellenförmigen Holzwerkstoffplatte.

Die Wellen, die in die Holzwerkstoffplatte eingeformt werden, erstrecken sich oberhalb und unterhalb einer zentralen Ebene (Amplitude o). Die wellenförmige Holzwerkstoffplatte nimmt also einen Raum ein, der begrenzt wird durch äußere Ebenen, die durch die Scheitelpunkte bzw. -linien der Amplituden definiert werden und die im Folgenden als Oberseite und Unterseite der Platte bezeichnet werden. Die Ober- und Unterseite verlaufen parallel zur zentralen Ebene.

Die Holzwerkstoffplatten weisen in der Regel eine Breite auf, die größer ist als die zu erzeugenden Lamellen. Die Platten weisen zudem meist eine Länge auf, die ein Mehrfaches der Wellenlänge beträgt, so dass eine Holzwerkstoffplatte bevorzugt mehrere aufeinanderfolgende Wellen aufweist. Die Scheitellinien der Wellen, die sich über die Breite der Platte erstrecken, bilden die Oberseite und die Unterseite der Platte. Sie stehen im Abstand der jeweiligen Wellenlänge zueinander. Der Abstand zwischen den Scheitellinien der Oberseite und der Scheitellinien der Unterseite der Platte entspricht dem Zweifachen der Amplitude.

Wellenlänge und Amplitude beeinflussen die Dichte der Mittellage wesentlich. Auch die Dichte der Holzwerkstoffplatte trägt signifikant zur Dichte der Mittellage und damit zum Gewicht der Verbundplatte bei. Die vorgenannten Faktoren tragen ebenfalls wesentlich zu den Festigkeitseigenschaften der Mittellage und zu weiteren physikalischen Eigenschaften wie dem Ausziehwiderstand bei.

Das Biegen der Holzwerkstoffplatte erfolgt nach einer bevorzugten Ausführung des Verfahrens dadurch, dass die wellenförmige Holzwerkstoffplatte in einer Presse mit wellenförmigem Pressblech oder in einer Presse mit einer wellenförmig einstellbaren Pressenkontur hergestellt wird. Holzwerkstoffplatten werden industriell in Taktpressen verarbeitet, die üblicherweise plane, parallel angeordnete Pressbleche aufweisen. Es können zum Herstellen der für das erfindungsgemäße Verfahren benötigten wellenförmigen Holzwerkstoffplatten aber auch wellenförmig gestaltete Pressformen oder Pressen mit wellenförmig einstellbarer Pressenkontur in vorhandenen Taktpressen eingesetzt werden. Diese Ausführung ist insbesondere für Holzwerkstoffplatten geeignet.

Alternativ können Holzwerkstoffplatten gebogen werden, indem die ursprünglich ebene Holzwerkstoffplatte durch abwechselnd oberhalb und unterhalb der Holzwerkstoffplatte versetzt zueinander angeordnete Rollen in Wellenform gebracht wird. Die Rollen sind zunächst im Abstand voneinander angeordnet, so dass die Holzwerkstoffplatte zwischen die oberhalb und unterhalb der Platte angeordneten Rollen eingeführt wird. Dann werden die oberhalb und unterhalb angeordneten Rollen aufeinander zu bewegt. Während der Verformung der Holzwerkstoffplatte sind die Rollen, die die Platte biegen, so angeordnet, dass ihre Umfangsflächen die zwischen die Rollen eingeführte Platte in einer durch die Rollen und deren Anordnung vorgegebenen Amplitude und Wellenlänge biegen. Durch die versetzte Anordnung der Rollen oberhalb und unterhalb der Holzwerkstoffplatte und dadurch, dass z.B. die oberen Rollen so weit abgesenkt werden können, dass sie mindestens mit einem Abschnitt ihrer Umfangsfläche zwischen den unteren Rollen angeordnet sind, biegen die versetzt angeordneten Rollen die Holzwerkstoffplatte wellenförmig. Werden Rollen als Werkzeug zum Herstellen der Bögen in der Holzwerkstoffplatte eingesetzt, schließt dieser Ausdruck auch Walzen und alle vergleichbaren Werkzeuge ein.

Nach einer vorteilhaften Ausführung der Erfindung werden die Holzwerkstoffplatten während oder unmittelbar nach der Herstellung gebogen bzw. mit Wellen versehen. Zu diesem Zeitpunkt kann der Umstand genutzt werden, dass das Bindemittel der Holzwerkstoffplatte zwar weitgehend ausgehärtet aber noch formbar ist. Die Formänderung von der ebenen zur wellenförmigen Holzwerkstoffplatte kann zu diesem Zeitpunkt mit geringem Kraftaufwand dauerhaft durchgeführt werden. Das Verformen in eine wellenförmige Platte kann durch das Kühlen der Rollen - und damit der in Wellen geformten Platte - unterstützt werden. Es ist grundsätzlich auch möglich, eine Holzwerkstoffplatte zu verformen, die nach der Herstellung, dass heißt, nach dem Aushärten des Bindemittels, bereits einmal auf Raumtemperatur abgekühlt ist. Dazu muss die Platte aber wieder erwärmt werden. Der erforderliche Energieaufwand beim Biegen ist daher weitaus größer. Es erweist sich deshalb allgemein als vorteilhaft für das Biegen der Holzwerkstoffplatten, beheizte Rollen zu verwenden.

Erfindungsgemäß werden zur Herstellung einer Mittellage der Verbundplatte mehrere gewellte Holzwerkstoffplatten zu einem Stapel übereinandergelegt. Die Anzahl der Holzwerkstoffplatten eines Stapels kann beliebig gewählt werden. Üblich sind 2-20 Platten, das Verfahren lässt sich wirtschaftlich aber auch mit Stapeln von 6-15 Platten durchführen. Bevorzugt liegen die Platten des Stapels mit den Scheitellinien der Wellen aufeinander, so dass sich minimale Anlageabschnitte zwischen den Platten ergeben, die vorzugsweise auf Anlagelinien reduziert sind. Diese Ausrichtung ergibt maximale Hohlräume zwischen den Platten, also besonders leichte Mittellagen. In einer einfachen Ausführung können die Lamellen der Mittellage aber auch in beliebiger Weise zueinander angeordnet sein.

Die mindestens zwei wellenförmigen Platten dieses Stapels von Holzwerkstoffplatten werden nach dem erfindungsgemäßen Verfahren miteinander verbunden, bevorzugt geklebt oder geleimt, verpresst oder in anderer Weise verbunden. Dann wird dieser Stapel oder Schichtkörper aus mehreren wellenförmigen Holzwerkstoffplatten in Pakete wellenförmiger Lamellen zerlegt. Die Schnittfläche, die durch das Herstellen der Lamellen entsteht, wird im Zusammenhang mit dieser Erfindung Trennkante genannt. Die Trennkante weist in der Gebrauchslage der wellenförmigen Lamellen zur Oberseite oder zur Unterseite der Mittellage. Sie weist damit in der Verbundplatte zu den Deckschichten; sie liegt in der erfindungsgemäßen Verbundplatte an den Deckschichten an.

Diese Pakete wellenförmiger Lamellen werden in einer Breite, die der späteren Höhe der Mittellage entspricht, aus dem Stapel miteinander verbundener wellenförmiger Holzwerkstoffplatten erzeugt. Ist das Paket zur Herstellung einer Verbundplatte als Mittellage auf einer Deckschicht ausgerichtet, weist die Mittellage eine Breite auf, die um ein Vielfaches über dem der einzelnen Lamelle liegt; sie entspricht der Höhe des Stapels miteinander verbundener wellenförmiger Holzwerkstoffplatten. Erfindungsgemäß wird also die Mittellage durch die Verwendung von Paketen wellenförmiger Lamellen in breiten Abschnitten bereitgestellt. Auf diese Weise wird sehr rationell eine Mittellage für eine Leichtbau-Verbundplatte hergestellt.

Die Pakete werden in einem von 90° abweichenden Winkel aus der Holzwerkstoffplatte abgetrennt, so dass die Oberfläche der Mittellage bzw. der Lamellen in der fertigen Verbundplatte in einem von 90° abweichenden Winkel zwischen den Deckschichten der Verbundplatte steht. Der Schnitt, der die Trennkanten erzeugt, wird also erfindungsgemäß nicht rechtwinklig zur Oberfläche der Holzwerkstoffplatten und der daraus erzeugten Lamellen verlaufen, sondern in einem Winkel α zwischen 5° und 85° bezogen auf die Oberfläche der Holzwerkstoffplatten, vorzugsweise beträgt der Winkel α zwischen 20° und 80°, bevorzugt zwischen 40° und 60° bezogen auf die Oberfläche der Holzwerkstoffplatte bzw. der aus dieser Platte hergestellten Lamellen. Durch die schräge Anordnung des Schnitts entstehen Trennkanten mit größerer Oberfläche, die eine bessere Lastverteilung von einer Deckschicht auf die Mittellage gewährleisten.

Die Mittellage, die in der erfindungsgemäßen Verbundplatte eingesetzt ist, steht damit, bezogen auf die Ebene, die durch eine Deckschicht vorgegeben wird, in einem Winkel β, der von 90° abweicht. Der Winkel β kann 5° bis 85° bezogen auf eine Deckschicht der Verbundplatte betragen. Die beiden Deckschichten der Verbundplatte sind parallel zueinander oberhalb und unterhalb der Mittellage angeordnet und die Mittellage ist erfindungsgemäß nicht im rechten Winkel zu den Deckschichten angeordnet.

Es ist selbstverständlich auch möglich, die Trennkanten - bezogen auf die Oberfläche der Holzwerkstoffplatte oder der daraus erzeugten Lamelle - mit einem rechtwinkligen Schnitt zu erzeugen, so dass die Oberfläche der Mittellage bzw. der Lamellen in der fertigen Verbundplatte in einem Winkel α von 90° ,bezogen auf die Ebene der Deckschicht, angeordnet ist. Allerdings ist hier in Kauf zu nehmen, dass die Trennkanten nur die minimale Größe erreichen. Dafür kann andererseits das vorhandene Material des Stapels wellenförmiger Holzwerkstoffplatten besser ausgenutzt werden. Entsprechend steht dann die Mittellage, die mit einem im Winkel α von 90° aus dem Stapel wellenförmiger Holzwerkstoffplatten heraus erzeugt wurde, dann auch in der Verbundplatte so, dass die Oberfläche der Lamellen, aus denen die Mittellage besteht, in einem Winkel β von 90° zu einer Deckschicht verlaufen.

Die erfindungsgemäße Verbundplatte weist eine Mittellage mit jeweils einer darüber und einer darunter angeordneten Deckschicht aus Holzwerkstoff auf, wobei die Mittellage wellenförmige Lamellen mit Trennkanten und einer Oberfläche zwischen den Trennkanten aufweist, wobei die wellenförmigen Lamellen Anlageabschnitte aufweisen, an denen zwei wellenförmige Lamellen abschnittsweise an der Oberfläche aneinander anliegen, wobei eine Trennkante der wellenförmigen Lamellen jeweils an einer Deckschicht anliegt und wobei die Oberfläche der Mittellage in einem Winkel β abweichend von 90° angeordnet ist, bezogen auf die Ebene, die durch eine Deckschicht gebildet wird. Bevorzugte Ausführungen der erfindungemäßen Verbundplatte sind vorstehend geschildert.

In einer einfachen Ausführung weist eine erfindungsgemäße Verbundplatte nur eine einzige Mittellage zwischen den Deckschichten auf, unabhängig davon, nach welcher Ausführung des erfindungsgemäßen Verfahrens sie hergestellt wurde. Die Mittellage wird aus wellenförmigen Lamellen hergestellt, die in der Breite so aus der oder den wellenförmigen Holzwerkstoffplatten abgetrennt werden, dass nach dem Drehen der wellenförmigen Lamellen bzw. der Pakete wellenförmiger Lamellen eine Mittellage definierter Höhe bereitgestellt ist, durch deren Verwendung die Verbundplatte unter Berücksichtigung der Stärke der Deckschichten die gewünschte Stärke erreicht.

Es ist aber zum Herstellen von Verbundplatten besonders hoher Abmessungen ohne weiteres möglich, auch mehrere Mittellagen übereinander zu schichten, z. B. um besonders starke Verbundplatten zu erzeugen: Die beiden oder die mehreren Schichten von Mittellagen können unmittelbar aufeinander fixiert, z. B. verleimt werden. Es ist aber auch möglich, eine bessere Fixierung der beiden oder der mehreren Schichten von Mittellagen zu erreichen, wenn zwischen den Schichten ein Papier, ein Furnier, eine Folie oder ein dünne Platte angeordnet wird, die mit den Mittellagen verbunden ist.

Die erfindungsgemäße Verbundplatte kann in leichten und schweren Ausführungen hergestellt werden, je nach dem, welche Holzwerkstoffe zu ihrer Herstellung eingesetzt werden. Eine bevorzugte Verwendung der erfindungsgemäßen Verbundplatte ist der Möbelbau. Es ist aber auch möglich, Verbundplatten für konstruktive Verwendungen herzustellen.

Details der Erfindung werden nachfolgend in Ausführungsbeispielen näher erläutert. Es zeigen:
- Fig. 1: einen Schnitt durch eine erfindungsgemäße Verbundplatte mit schräg angeordneter Mittellage
- Fig. 2: eine schematische Darstellung zur Erläuterung von Amplitude und Wellenlänge
- Fig. 3: eine Ansicht von drei verbundenen wellenförmigen Holzwerkstoffplatten
- Fig. 4: eine Draufsicht wellenförmiger Lamellen zum Herstellen einer Mittellage für eine Verbundplatte
- Fig. 5: eine perspektivische Ansicht wellenförmiger Lamellen zum Herstellen einer Mittellage für eine Verbundplatte
- Fig. 6: eine Ansicht einer wellenförmigen Holzwerkstoffplatte mit schrägen Trennschnitten
- Fig. 7: einen Schnitt durch eine erfindungsgemäße Verbundplatte mit zwei Mittellagen

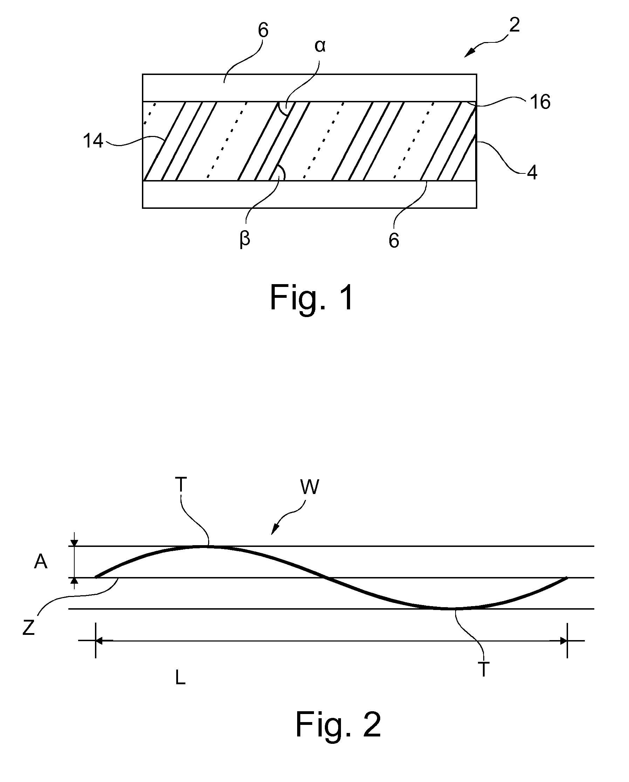

Fig. 1 zeigt eine Verbundplatte 2. Die Verbundplatte 2 weist eine Mittellage 4 auf, auf die je eine Deckschicht 6 oberhalb und unterhalb der Mittellage angeordnet ist. Die Mittellage 4 und die Deckschicht 6 sind aus Holzwerkstoff, typischerweise aus Spanplatte, Faserplatte, bevorzugt mitteldichter Faserplatte, OSB-Platte oder Sperrholz. Mittellage 4 und Deckschichten 6 sind miteinander verbunden, üblicherweise verleimt und sie können aus gleichem oder unterschiedlichem Holzwerkstoff hergestellt sein.

Die Mittellage 4 besteht aus Lamellen gewellter Holzwerkstoffplatte, z. B. mitteldichter Faserplatte. Die Holzwerkstoffplatte - und damit auch die Lamellen - können bis zu 6 mm stark sein, sind aber typischerweise mit 1,5 mm bis zu 3 mm dünner, um besser gebogen werden zu können. Die Deckschichten 6 bestehen hier aus Spanplatten, die die geschlossene Oberfläche der Verbundplatte 2 herstellen.

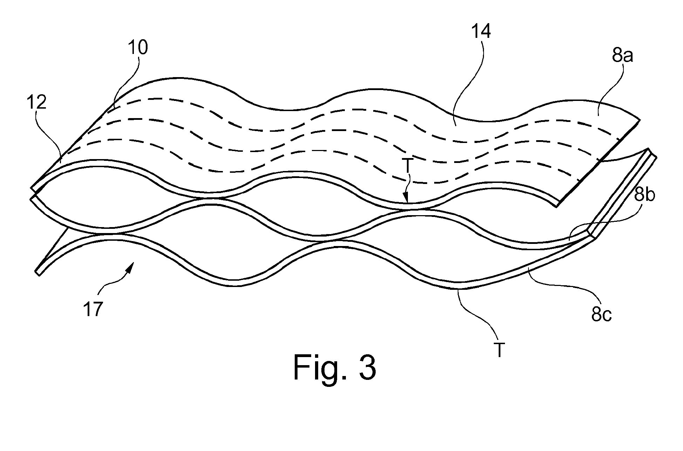

Die Mittellage 4 wird aus einer wellenförmigen Holzwerkstoffplatte 8 hergestellt. Fig. 3 zeigt schematisch drei wellenförmige Holzwerkstoffplatten 8a, 8b und 8c. Die wellenförmige Holzwerkstoffplatte 8 wird hergestellt, in dem eine Holzwerkstoffplatte, z. B. eine kontinuierlich hergestellte mitteldichte Faserplatte, unmittelbar nach der Herstellung, vor dem erstmaligen Abkühlen der Faserplatte zwischen zwei übereinander versetzt angeordneten Reihen von Walzen eingebracht wird. Die obere Reihe der Walzen wird dann so weit abgesenkt, dass die Faserplatte aus der ursprünglich ebenen Form ausgelenkt und verformt wird, wobei die Platte abkühlt. Nach dem Abkühlen der Faserplatte ist eine wellenförmige Holzwerkstoffplatte 8 entstanden. Die Walzen werden dann wieder in ihre Ausgangsstellen geführt und die wellenförmige Holzwerkstoffplatte wird dann aus der Walzenanordnung entfernt. Alternativ kann die wellenförmige Holzwerkstoffplatte 8 hergestellt werden, indem eine Holzwerkstoffplatte, z. B. eine 3 mm Faserplatte, in eine Kurztaktpresse mit wellenförmigen Pressblechen oder -formen überführt wird und dort unter Einwirkung von Druck und Hitze (z. B. bei 160 °C, 30 Sekunden Pressdauer) zu einer wellenförmigen Holzwerkstoffplatte verformt wird. Als weitere Alternative kann eine Kurztaktpresse eingesetzt werden, die mit variablen Druckstempeln ausgestattet ist, die in Form einer Welle angeordnet sind, so dass eine ebene Holzwerkstoffplatte zu einer wellenförmigen Holzwerkstoffplatte gepresst werden kann.

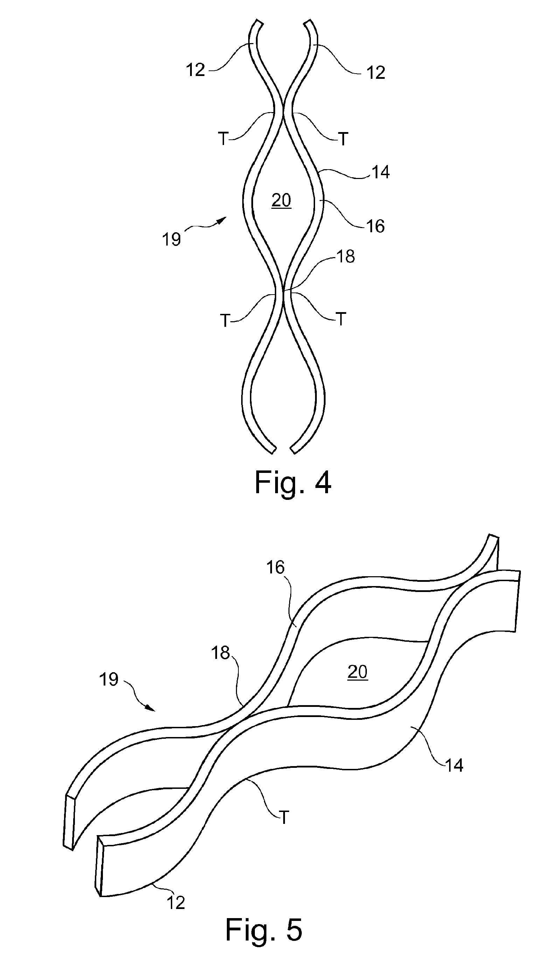

Fig. 2 zeigt in schematischer Darstellung die zur Kennzeichnung der Abmessungen der Welle W verwendeten Begriffe Amplitude A, der Wellenlänge L sowie des Scheitelpunkts bzw. der Scheitellinie T. Die Wellen sind, wie in Fig. 2 gezeigt, bevorzugt sinusförmig und erstrecken sich gleichmäßig oberhalb und unterhalb der zentralen Ebene Z der wellenförmigen Holzwerkstoffplatte. Die Oberseite und die Unterseite einer wellenförmigen Holzwerkstoffplatte werden durch die Scheitellinien T gebildet. Die Amplitude A der Wellen W der Holzwerkstoffplatte 8 beträgt 0,5 mm bis 20 mm. Die Wellenlänge W beträgt bevorzugt 5 mm bis 200 mm. Bei den in Fig. 3 gezeigten wellenförmigen Holzwerkstoffplatten beträgt die Amplitude A einer Welle 8 mm, die Wellenlänge L 120 mm, bei den in Fig. 5 dargestellten Lamellen beträgt die Amplitude A 12 mm, die Wellenlänge L 90 mm (Darstellung nicht maßstäblich).

Die Mittellage 4, die aus den wellenförmigen Holzwerkstoffplatten 8 hergestellt wird, ist aus wellenförmigen Lamellen 12 zusammengesetzt, die eine Oberfläche 14 aufweisen, die jeweils die Oberseite und die Unterseite einer Lamelle 12 bildet. Die Lamellen 12 weisen weiter Trennkanten 16 auf, die die Kanten der Lamellen bilden und die die Oberfläche einer Lamelle 12 begrenzen. Die Herstellung der Mittellage 4 kann wie nachstehend beschrieben erfolgen:
Bei dem erfindungsgemäßen Verfahren werden wellenförmige Holzwerkstoffplatten 8a, 8b, 8c aufeinandergelegt und miteinander zu einem Stapel 17 verbunden, so wie in Fig. 3 dargestellt. Mindestens zwei Platten, gemäß Fig. 3 drei Platten 8a, 8b, 8c; bevorzugt 10 bis 20 Platten 8 werden in einem Stapel 17 miteinander verbunden. Erfindungsgemäß bewirkt das Stapeln der Holzwerkstoffplatten 8, dass sich Anlageabschnitte 18 ergeben,
an denen die wellenförmigen Holzwerkstoffplatten 8a, 8b und 8c aneinander liegen.
Anlageabschnitt 18 wechselt sich mit Hohlraum 20 ab. Ein Hohlraum 20 wird dadurch gebildet, dass die Oberflächen 14 von zwei an ihren Scheitellinien T aneinander anliegenden Lamellen 12 zwischen den Anlageabschnitten 18 im Abstand voneinander angeordnet sind. Fig. 3, Fig. 4 und Fig. 5 zeigen eine Ausführung, bei der jeweils Scheitellinien T einer Welle W am Anlageabschnitt 18 aneinander anliegen. Auf diese Weise entstehen maximale Hohlräume 20. Es ist aber auch ohne weiteres möglich, die bogenförmigen Lamellen 12 so anzuordnen, dass nicht jeweils die Scheitelpunkte T einer Welle W aufeinander treffen. Dadurch entstehen dann kleinere Hohlräume 20.

Die Lamellen 12 im Stapel 17 sind miteinander durch Verleimen verbunden. Vorteilhaft werden die Lamellen 12, die an den Anlageabschnitten 18 mit der Oberfläche 14 aneinander anliegen, verklebt oder verpresst. Beispielsweise können die Lamellen 12 an den Scheitellinien T, die als Anlageabschnitte 18 gewählt wurden, beleimt bzw. mit Klebstoff versehen werden, der beim Aneinanderlegen oder -pressen der Lamellen 12 im Stapel 17 abbindet und die Lamellen 12 verbindet. Die Wahl des Verbindungsmittels richtet sich unter anderem z.B. nach der Art und Stärke der Holzwerkstoffplatte, aus der die Mittellage hergestellt ist oder nach den Belastungen, denen die Mittellage im späten Gebrauch ausgesetzt ist. Eine Mittellage 4, die aus verbundenen, wellenförmigen Lamellen 12 hergestellt ist, kann unmittelbar zu einer Verbundplatte 2 weiterverarbeitet werden. Sie kann aber auch als Halbfertig-Produkt gehandelt werden.

Die Mittellage 4 für die erfindungsgemäße Verbundplatte (siehe Fig. 3) wird aus dem Stapel 17 wellenförmiger Holzwerkstoffplatten 8a, 8b, 8c wie folgt hergestellt: Ein wie vorstehend beschriebener Stapel 17 von zwei oder mehr miteinander verbundenen, wellenförmigen Holzwerkstoffplatten 8, die eine Länge von 560 cm und eine Breite von 240 cm sowie eine Stärke von 3 mm aufweisen, bilden einen Stapel 17 mit einer Höhe von 57 mm (3 Platten à 3mm mit einer Amplitude von 8 mm). Dieser Stapel von wellenförmigen Holzwerkstoffplatten wird in Pakete 19 wellenförmiger Lamellen 12 von 40 mm Breite aufgetrennt. Dies ist in Fig. 3 durch die Trennlinien 10 angedeutet. Es entstehen also Pakete 19 aus miteinander verbundenen, wellenförmigen Lamellen 12 aus Holzwerkstoff-Material (siehe auch Fig. 4, 5). Diese Pakete 19 weisen als Mittellage 4, ausgerichtet auf einer Deckschicht 6, eine Länge von 560 cm, eine Breite von 57 mm und eine Höhe von 40 mm auf. Die Breite der Mittellage 4 entspricht der Höhe des Stapels 17. Ein Paket 19, das aus einem Stapel 17 mit 20 Platten (Plattenstärke 5 mm) einer Amplitude A von 20 mm hergestellt wird, weist als Mittellage 4, angeordnet auf einer Deckschicht 6, eine Breite von 90 cm auf.

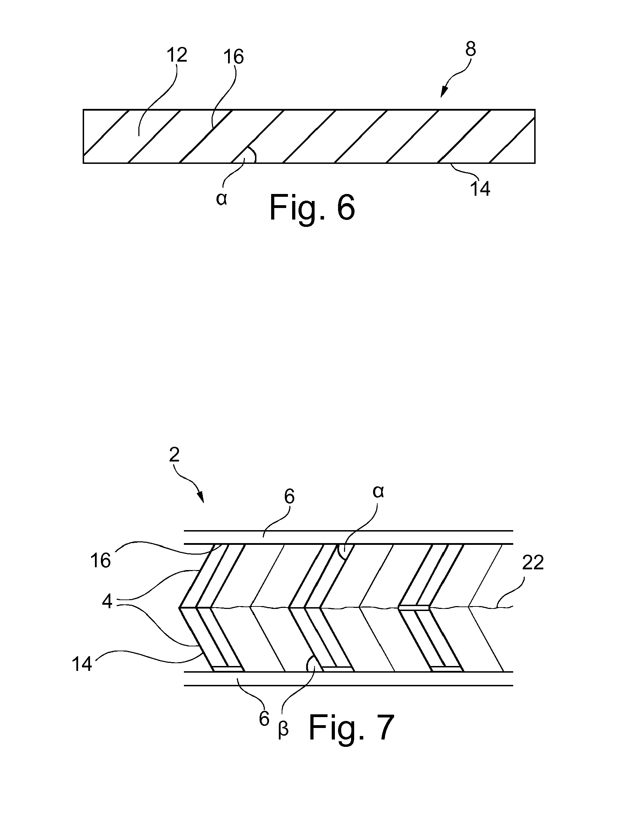

Fig. 6 zeigt einen Schnitt durch eine wellenförmige Holzwerkstoffplatte 8, in dem die Trennschnitte, die die Trennkanten 16 schaffen, dargestellt sind. Die Trennschnitte werden in einem Winkel α geführt, der von 90° abweicht. Der Winkel α wird gemessen zwischen der Oberfläche 14 und einer Trennkante 16 der wellenförmigen Lamelle 12 der Mittellage 4. Üblicherweise liegt der Winkel α zwischen 5° und 85°. Bevorzugt beträgt der Winkel α 20° bis 80°, vorteilhaft 40° bis 60°. Der in Fig. 6 gewählte Winkel α beträgt 45°. Die Trennkanten 16 stehen damit bei den wellenförmigen Lamellen 12 nicht in einem Winkel α von 90° bezogen auf die Oberfläche 14 der Lamellen 12. Der besondere Vorteil einer derart ausgebildeten Mittellage ist, dass die Trennkante 16 vergrößert ist, so dass eine besonders stabile Verbindung mit einer Deckschicht gewährleistet ist.

Anders als bei bekannten Verbundplatten 2 mit Mittellage 4 aus Holzwerkstoff liegt die Oberfläche 14 der Lamellen 12 der Mittellage -und damit die Scheitellinie T der wellenförmigen Holzwerkstoffplatte 8- nicht an einer Deckschicht 6 an. Die Trennkanten 16 der Lamellen 12 weisen nach oben bzw. nach unten; sie bilden die Oberseite und die Unterseite der Mittellage und liegen in der fertigen Verbundplatte an einer Deckschicht 6 der Verbundplatte 2 an. Die Scheitellinien T der wellenförmigen Lamellen 12 erstrecken sich zwischen der Oberseite und der Unterseite der Mittellage 4; sie verlaufen nicht in einer Ebene parallel zu einer Deckschicht 6. Die erfindungsgemäße Verbundplatte 2 weist also eine Mittellage 4 aus Holzwerkstoff auf, die -bezogen auf eine Deckschicht 6-anders ausgerichtet ist als bei bekannten Verbundplatten.

Fig. 1 zeigt eine erfindungsgemäße Verbundplatte 2 mit einer Mittellage 4 mit einer O-berseite, die gebildet ist aus schräg stehenden Trennkanten 16. Entsprechend sind die Oberflächen 14 der wellenförmigen Lamellen 12 in einem Winkel β angeordnet, der von 90° abweicht und zwischen 5° und 85° betragen kann. Der Winkel β wird gemessen zwischen der Ebene, die durch eine Deckschicht gebildet wird und der Oberfläche 14 einer wellenförmigen Lamelle 12 der Mittellage 4. Er beträgt bei der in Fig. 1 gezeigten Ausführung 45°. Diese schräg angeordnete Mittellage 4 kann in einer Schicht verwendet werden, so wie in Fig. 1 dargestellt.

Wie in Fig. 7 gezeigt, sind nach einer alternativen Ausführung der Erfindung zwischen den Deckschichten 6 der Verbundplatte 2 zwei Mittellagen 4 mit schräg stehenden Trennkanten 16 angeordnet. Dadurch wird eine besonders voluminöse Verbundplatte hergestellt, ohne dass eine besonders voluminöse Mittellage 4 hergestellt werden muss. Die Eigenfestigkeit der wellenförmigen Lamellen 12 erlaubt ohne Weiteres die Verwendung zwei- oder mehrschichtiger Mittellagen 4. Die einzelnen Schichten der Mittellage 4 können miteinander verbunden sein, z. B. verklebt sind. Falls gewünscht oder erforderlich, kann ein Papier, eine Folie oder eine dünne Mittelplatte zwischen den Mittellagen angeordnet und mit den Mittellagen verbunden sein. In Fig. 7 ist ein hochfestes Papier 22 zwischen den einander zugewandten Trennkanten 16 angeordnet.

Gleiche Merkmale sind in den Figuren mit gleichen Bezugszeichen dargestellt.

## Patentansprüche

1. Verfahren zum Herstellen einer Verbundplatte (2) aus Holzwerkstoff mit den Schritten
- Herstellen von mindestens zwei wellenförmigen Holzwerkstoffplatten (8) mit einer Oberfläche (14),
- Verbinden der mindestens zwei wellenförmigen Holzwerkstoffplatten (8) an Anlageabschnitten (18) auf der Oberfläche (14) der Holzwerkstoffplatten (8) zu einem Stapel (17),
- Herstellen einer Mittellage (4) durch Zerlegen des Stapels (17) in Pakete (19) wellenförmiger Lamellen (12) mit Trennkanten (16), die in einem Winkel α, der von 90° abweicht, zur Oberfläche (14) angeordnet ist, wobei die Breite der Lamellen (12) die Dicke der Mittellage (4) vorgibt,
- Anordnen einer Mittellage (4) zwischen zwei Deckschichten (6) aus Holzwerkstoff, wobei die Oberfläche (14) Mittellage (4) in einem Winkel β angeordnet ist, der von 90° abweicht, bezogen auf die Ebene, die durch eine Deckschicht (6) gebildet wird.

2. Verfahren nach Anspruch 1, **dadurch gekennzeichnet, dass** die wellenförmige Holzwerkstoffplatte (8) mit einer Welle (W) versehen wird, deren Wellenlänge (L) zwischen 5 mm und 200 mm, vorzugsweise zwischen 10 mm und 100 mm beträgt.

3. Verfahren nach Anspruch 2, **dadurch gekennzeichnet, dass** die wellenförmige Holzwerkstoffplatte (8) mit einer Welle (W) versehen wird, deren Amplitude (A) 0,5 mm bis 20 mm, vorzugsweise 1 mm bis 10 mm beträgt.

4. Verfahren nach mindestens einem der vorangehenden Patentansprüche, **dadurch gekennzeichnet, dass** die wellenförmige Holzwerkstoffplatte (8) in einer Presse mit wellenförmigem Pressblech oder in einer Presse mit einer wellenförmig einstellbaren Pressenkontur hergestellt wird.

5. Verfahren nach mindestens einem der Ansprüche 1-3, **dadurch gekennzeichnet, dass** die wellenförmige Holzwerkstoffplatte (8) durch eine Rollenbahn geformt wird, deren Rollen abwechselnd und versetzt oberhalb und unterhalb der Holzwerkstoffplatte (8) angeordnet sind, wobei die oberhalb der Holzwerkstoffplatte (8) angeordneten Rollen zum Verformen der Holzwerkstoffplatte (8) zwischen die unterhalb angeordneten Rollen abgesenkt werden.

6. Verfahren nach mindestens einem der vorangehenden Ansprüche, **dadurch gekennzeichnet, dass** Pakete (19) wellenförmiger Lamellen (12) durch Schneiden, Sägen oder Fräsen aus dem Stapel (17) wellenförmiger Holzwerkstoffplatten (8) hergestellt wird.

7. Verfahren nach mindestens einem der vorangehenden Ansprüche, **dadurch gekennzeichnet, dass** zwei aneinanderliegende wellenförmige Lamellen (12) zwischen zwei Anlageabschnitten (18) einen Hohlraum (20) bilden.

8. Verfahren nach mindestens einem der vorangehenden Ansprüche, **gekennzeichnet durch** das Anordnen einer Mittellage (4), aufweisend mindestens zwei übereinander angeordnete Pakete (19) wellenförmiger Lamellen (12) zwischen Deckschichten (6).

9. Verbundplatte (2), aufweisend eine Mittellage (4) mit jeweils einer darüber und darunter angeordneten Deckschicht (6) aus Holzwerkstoff, wobei
- die Mittellage (4) wellenförmige Lamellen (12) mit Trennkanten (16) und einer Oberfläche (14) zwischen den Trennkanten (16) aufweist, wobei
- die wellenförmigen Lamellen (12) Anlageabschnitte (20) aufweisen, an denen zwei wellenförmige Lamellen (12) abschnittsweise an der Oberfläche (14) aneinander anliegen, wobei
- eine Trennkante (16) der wellenförmigen Lamellen (12) jeweils an einer Deckschicht (6) anliegt und wobei
- die Oberfläche (16) der Mittellage (4) in einem Winkel β abweichend von 90° angeordnet ist, bezogen auf die Ebene, die durch eine Deckschicht (6) gebildet wird.

10. Verbundplatte nach Anspruch 9, **dadurch gekennzeichnet, dass** die wellenförmigen Lamellen (12) an Anlageabschnitten (18) miteinander verklebt oder verpresst sind.

11. Verbundplatte nach Anspruch 9 oder 10, **dadurch gekennzeichnet, dass** zwei wellenförmige Lamellen (12) Hohlräume (20) zwischen den Anlageabschnitten (18) aufweisen.

12. Verbundplatte nach mindestens einem der Ansprüche 9-11, **dadurch gekennzeichnet, dass** die wellenförmige Lamelle (12) eine Welle (W) mit einer Amplitude (A) von 0,5 mm bis 20 mm, bevorzugt von 1 mm bis 10 mm aufweist.

13. Verbundplatte nach Anspruch 12, **dadurch gekennzeichnet, dass** die wellenförmige Lamelle (12) eine Welle (W) mit einer Wellenlänge (L) von 5 mm bis 200 mm, vorzugsweise von 10 mm bis 100 mm aufweist.

14. Verbundplatte nach mindestens einem der vorangehenden Ansprüche 9-13, **dadurch gekennzeichnet, dass** die Trennkante (16) der wellenförmigen Lamelle (12) bezogen auf die Oberfläche (14) der Lamellen (12) in einem Winkel α von 20° bis 85° angeordnet ist.

15. Verbundplatte nach mindestens einem der vorangehenden Ansprüche 9-14, **dadurch gekennzeichnet, dass** mehrere Mittellagen (4) zwischen den Deckschichten (6) angeordnet sind, wobei jeweils zwei Mittellagen (4) einander mit jeweils einer Trennkante (16) zugewandt sind.

16. Verbundplatte nach mindestens einem der vorangehenden Ansprüche 9-15, **dadurch gekennzeichnet, dass** die Mittellage (4) aus Span- oder Faserplatte, bevorzugt mitteldichter Faserplatte, hergestellt ist.
